# EUROPEAN PATENT APPLICATION

(11) **EP 4 298 909 A1**
(43) Date of publication of application: **03.01.2024**
(21) Application number: 22756063.8
(22) Date of filing: 09.02.2022
(51) Int. Cl.: A01N 59/16, A01N 25/04, A01N 25/10, A01P 1/00, A01P 3/00, C09D 5/14, C09D 7/61, C09D 201/00

(54) **ANTIMICROBIAL AGENT, ANTIMICROBIAL PRODUCT, AND ANTIMICROBIAL COATING**

(30) Priority: 18.02.2021 JP 2021024451
(71) Applicant: Kyodo Printing Co., Ltd., Tokyo 112-8501 (JP)
(72) Inventor: KARINO, Tomomi, Tokyo 112-8501 (JP); TERADA, Akira, Tokyo 112-8501 (JP); KOBAYASHI, Fumihito, Tokyo 112-8501 (JP); YAMADA, Atsushi, Yokkaichi-shi, Mie 512-0934 (JP)
(74) Representative: Ricker, Mathias
(86) International application number: PCT/JP2022/005167
(87) International publication number: WO 2022/176742

(57) **Abstract**

The present invention pertains to an antimicrobial agent that causes little environmental pollution and has excellent safety, an antimicrobial product having an antimicrobial layer containing said antimicrobial agent, and an antimicrobial coating containing said antimicrobial agent, the antimicrobial agent being represented by formula (1) Ln₂ₓFe₂(₁₋ₓ)O₃ (in formula (1), Ln is a rare earth element selected from the group consisting of lanthanum, praseodymium, neodymium and yttrium; and x is a number that is at least 0.55 and is less than 1.00).

## Description

### FIELD

The present invention relates to an antibacterial agent, an antibacterial product comprising an antibacterial layer comprising the antibacterial agent, and an antibacterial coating material comprising the antibacterial agent.

### BACKGROUND

In recent years, from the viewpoint of hygiene, various products subjected to antibacterial processing have been in circulation. The need for antibacterial properties has been increasing, not only for products directly used by consumers, but also for, for example, exterior and interior walls of building, building materials, air filters, and packings.

Phenol-based, organotin-based, triazine-based, sulfonylpyridine halide-based, captan-based, organocopper-based, chloronaphthalene-based, and chlorophenylpyridazine-based compounds are known as chemical agents that exhibit an antibacterial effect (refer to PTL 1).

Silver ions, copper ions, and zinc ions are known as ions that exhibit an antibacterial effect. Toxicity of the metal ions is utilized by supporting, for example, a metal powder of silver, copper, or zinc, or an alloy or a compound thereof on a carrier and allowing a trace amount of metal ions to elute. PTL 2 discloses a dispersion liquid having deodorant, antibacterial, and antifungal properties, in which a carboxylate metal salt formed from a carboxyl group-containing polymer and a metal compound is dispersed.

### [CITATION LIST]

### [PATENT LITERATURE]

[PTL 1] Japanese Unexamined Patent Publication (Kokai) No. 63-17249
[PTL 2] Japanese Unexamined Patent Publication (Kokai) No. 2-288804
[PTL 3] Japanese Unexamined Patent Publication (Kokai) No. 2005-272320

### SUMMARY

### [TECHNICAL PROBLEM]

Recently, antibacterial agents in the form of chemical agents and antibacterial agents utilizing the toxicity of metal ions have sometimes been viewed as problematic in terms of environmental contamination and safety.

In recent years, ferrite compounds have been proposed as anti-algae agents having a low degree of environmental contamination and excellent safety. For example, PTL 3 discloses an anti-algae additive mainly composed of an orthoferrite comprising a rare earth element selected from lanthanum (La), praseodymium (Pr), neodymium (Nd), and yttrium (Y); iron; and oxygen, an anti-algae coating material using the same, and an anti-algae product in which the coating material is applied on a substrate surface.

PTL 3 describes that presumably an anti-algae effect is associated with magnetic properties of the material, and thus orthoferrites of a rare earth oxide to Fe₂O₃ = 1:1 (molar ratio), which exhibit a small coercive force and a magnetic force close to intrinsic magnetic fields of plants, are most preferable as anti-algae additives. It should be noted that the antibacterial effect of orthoferrites has not been examined in PTL 3.

In view of the above background, an object of the present invention is to provide an antibacterial agent having a low degree of environmental contamination and excellent safety, an antibacterial product comprising an antibacterial layer comprising the antibacterial agent, and an antibacterial coating material comprising the antibacterial agent.

### [SOLUTION TO PROBLEM]

The present inventors have undergone intensive studies to achieve the above object. The present inventors have discovered that a rare earth ferrite having a specific composition can be used as an antibacterial agent having a low degree of environmental contamination and excellent safety, and have completed the present invention. Specifically, the present invention is as follows.

### «Aspect 1»

An antibacterial agent, represented by a formula (1) below:

Ln₂ₓFe₂(₁₋ₓ)O₃ (1)

where in the formula (1), Ln is a rare earth element selected from the group consisting of lanthanum, praseodymium, neodymium, and yttrium; and x is a number of 0.45 or greater and less than 1.00.

### «Aspect 2»

The antibacterial agent according to Aspect 1, where in the formula (1), x is a number of 0.65 or greater and 0.85 or less.

### «Aspect 3»

The antibacterial agent according to Aspect 1 or 2, where in the formula (1), Ln is lanthanum.

### «Aspect 4»

An antibacterial product, comprising a substrate and an antibacterial layer, wherein
the antibacterial layer is a layer comprising the antibacterial agent according to any one of Aspects 1 to 3.

### «Aspect 5»

The antibacterial product according to Aspect 4, wherein the antibacterial layer further comprises a resin.

### «Aspect 6»

The antibacterial product according to Aspect 4 or 5, which is selected from the group consisting of an interior wall, a building material, a joint material, a sealing material, furniture, an air filter, an insole, a garment, a hygienic product, a medical material or tool, a bath mat, a towel, and bedding.

### «Aspect 7»

An antibacterial coating material, comprising the antibacterial agent according to any one of Aspects 1 to 3.

### «Aspect 8»

The antibacterial coating material according to Aspect 7, further comprising a resin and a solvent.

### [ADVANTAGEOUS EFFECTS OF INVENTION]

According to the present invention, an antibacterial agent having a low degree of environmental contamination and excellent safety is provided.

The antibacterial agent of the present invention also exhibits an antibacterial effect on the surroundings thereof. Specifically, the antibacterial effect can spread to parts not in direct contact with the antibacterial agent of the present invention. Thus, when preparing an antibacterial product using the antibacterial agent of the present invention, even if the antibacterial agent is not present in the entirety of an article of the product, an antibacterial effect can be exhibited.

The antibacterial agent of the present invention has excellent dispersibility in water and organic solvents. Thus, dispersants and coating materials dispersed in various media can be prepared. Therefore, by applying a coating material comprising the antibacterial agent of the present invention on an article acting as a substrate to form a layer comprising the antibacterial agent, an antibacterial effect can be imparted on materials on which an antibacterial agent could not be applied and places having complex shapes.

### DESCRIPTION OF EMBODIMENTS

### <<Antibacterial agent>>

The antibacterial agent of the present invention is a rare earth ferrite compound having a specific composition, represented by the following formula (1):

Ln₂ₓFe₂(₁₋ₓ)O₃ (1)

where in the formula (1), Ln is a rare earth element selected from the group consisting of lanthanum, praseodymium, neodymium, and yttrium; and x is a number of 0.45 or greater and less than 1.00.

The present inventors have examined compositions of rare earth ferrites and the antibacterial effect thereof in detail. As a result, the present inventors have discovered that a high antibacterial effect can be obtained by setting the rare earth (Ln)-to-Fe ratio in the rare earth ferrite to the above range.

The antibacterial agent of the present invention may be in any form as long as x in the above formula (1) is a number of 0.45 or greater and less than 1.00. For example, a solid solution having a uniform composition as a whole may be formed, a mixture of an LnFeO₃ phase and an Ln₂O₃ phase may be formed, or a mixture of a solid solution having a uniform solution, an LnFeO₃ phase, and an Ln₂O₃ phase may be formed. Other phases may also be included.

The x in the formula (1) may be 0.50 or greater, 0.55 or greater, 0.60 or greater, 0.65 or greater, 0.70 or greater, or 0.75 or greater, and may be 0.90 or less, 0.85 or less, 0.80 or less, 0.75 or less, 0.70 or less, 0.65 or less, or 0.60 or less.

Typically, for example, the x in the formula (1) may be a number of 0.50 or greater and 0.90 or less, may further be 0.65 or greater and 0.85 or less, and may particularly be a number of 0.70 or greater and 0.80 or less.

From the viewpoints of antibacterial property and cost, the rare earth (Ln) in the formula (1) may particularly be lanthanum. Therefore, the antibacterial agent of the present invention may be lanthanum ferrite.

### <Production method for antibacterial agent>

The production method for the antibacterial agent of the present invention is not particularly limited. For example, the antibacterial agent may be produced by applying an appropriate stress to pulverize and mix a mixture containing a rare earth source and an iron source in a predetermined ratio, followed by firing the mixture. The applied stress may be, for example, frictional force, shear force, shear stress, or impact force. Examples of a method of applying such stress to the mixture of a rare earth source and an iron source include a method of wet pulverization in a ball mill.

As the rare earth source, for example, oxides of desired rare earth elements may be used, and bastnasite, monazite, and xenotime may be used.

As the rare earth element, it is preferable to use lanthanum from the viewpoints of excellent antibacterial property and cost of the resulting rare earth ferrite. In particular, when La₂O₃ is used as the lanthanum source, a highly effective and relatively low-cost lanthanum ferrite can be produced.

As the iron source, oxides such as FeO, Fe₃O₄, and Fe₂O₃; oxy oxides such as FeOOH, ferrihydrite, and schwertmannite; and hydroxides such as Fe(OH)₂ and Fe(OH)₃ may be used.

Of the above, if FeOOH is used as the iron source, since the reactivity thereof is higher than Fe₂O₃, firing at a low temperature is possible, and an antibacterial agent having a smaller particle size can be produced than when Fe₂O₃ is used as the iron source.

When the mixture of a rare earth source and an iron source is pulverized and mixed by wet pulverization, for example, water or an alcohol may be used as a liquid medium. After the mixture of a rare earth source and an iron source is pulverized and mixed, if necessary, the liquid medium may be removed by an appropriate method such as heat drying, followed by firing.

The firing temperature is not particularly limited, and can be appropriately set. Firing may be carried out at a temperature of, for example, 700 °C or higher, 800 °C or higher, 900 °C or higher, or 1,000 °C or higher and, for example, 1,300 °C or lower, 1,200 °C or lower, 1,100 °C or lower, or 1,000 °C or lower.

The firing time is also not particularly limited and can be appropriately set. For example, firing may be carried out for a time of 1 h or more, 2 h or more, 3 h or more, 4 h or more, 6 h or more, 8 h or more, 12 h or more, or 15 h or more and 72 h or less, 48 h or less, 36 h or less, 24 h or less, 18 h or less, or 15 h or less.

The ambient atmosphere during firing may be an oxidizing atmosphere, for example, firing in air.

After firing, the antibacterial agent of the present invention can be obtained by pulverizing or classifying by an appropriate method, if necessary.

### <Use amount of antibacterial agent>

The use form of the antibacterial agent of the present invention is not particularly limited, and the antibacterial agent can be used in, for example, a powder form, an impregnated form, or a coating film form.

When the use form of the antibacterial agent is in a powder form, it is preferable that 1 g or more of the antibacterial agent be used in order to sufficiently exhibit an antibacterial effect.

When the use form of the antibacterial agent is in an impregnated form, it is preferable that, for example, 0.01 to 0.5 g of the antibacterial agent be impregnated in 0.06 g of paper.

When the use form of the antibacterial agent is in a coating film form and used as a coating material comprising the antibacterial agent, it is preferable that, for example, 30% by mass or greater of the antibacterial agent be contained in the total solid content of the coating material.

### <<Antibacterial product>>

Another aspect of the present invention is an antibacterial product comprising an antibacterial layer comprising the antibacterial agent of the present invention. Specifically, the antibacterial product comprises a substrate and an antibacterial layer, wherein the antibacterial layer is a layer comprising the antibacterial agent of the present invention.

### <Substrate>

The substrate in the antibacterial product of the present invention may be any article to be imparted with an antibacterial property. The substrate may be any article composed of any material and having any shape, wherein an antibacterial property is required.

### <Antibacterial layer>

The antibacterial layer in the antibacterial product of the present invention is not particularly limited, as long as the layer comprises the antibacterial agent of the present invention. For example, the antibacterial layer may be a layer prepared by blending a powder of the antibacterial agent of the present invention with a resin and then carrying out extrusion coating, or may be a cured product of the antibacterial coating material of the present invention described below.

The antibacterial layer may comprise optional components in addition to the antibacterial agent of the present invention. The optional components are not particularly limited. Examples thereof include resins, binders, or additives for exhibiting a non-antibacterial function.

The resin optionally contained in the antibacterial layer of the antibacterial product of the present invention is not particularly limited and may be, for example, an acrylic resin, an acrylic-silicone resin, a silicone resin, an amino-alkyd resin, an epoxy resin, a phenolic resin, a polyurethane resin, an unsaturated polyester resin, or a fluororesin.

The thickness of the antibacterial layer is not particularly limited and may be, for example, about 1 µm or more and 1 mm or less.

When the antibacterial layer is prepared with an antibacterial coating material, the application amount thereof as dry mass after solvent removal per unit area may be, for example, 5 g/m² or more, 10 g/m ² or more, 15 g/m² or more, 20 g/m² or more, or 25 g/m² or more and may be, for example, 200 g/m ² or less, 150 g/m ² or less, 120 g/m ² or less, 100 g/m ² or less, 80 g/m ² or less, or 70 g/m ² or less.

### <Additional features>

The antibacterial product of the present invention preferably comprises a substrate and an antibacterial layer as indispensable features, and may include additional features. Examples of the additional feature include an additional layer. The additional layer may be on the outside of the substrate, between the substrate and the antibacterial layer, or on the outside of the antibacterial layer.

Examples of the additional layer include a primer layer formed on the substrate. By forming the antibacterial layer on a primer layer, adhesion can be improved.

The deterioration of the antibacterial effect due to loss or leakage of the antibacterial agent from long-term use may be suppressed by laminating and covering the outside of the antibacterial layer with a resin.

A hue pigment layer may be laminated on the outside of the antibacterial layer to increase the degree of freedom in color design of the antibacterial product. Other functional layers may be laminated thereon or combined therewith to provide a non-antibacterial performance.

### <Application>

The antibacterial product of the present invention is not particularly limited and may be, for example, an interior wall, a building material, a joint material, a sealing material, furniture, an air filter, an insole, a garment, a hygienic product, a medical material or tool, a bath mat, a towel, or bedding.

### «Antibacterial coating material»

Another aspect of the present invention is an antibacterial coating material comprising the antibacterial agent of the present invention. The antibacterial coating material may comprise additional components such as resins and solvents, in addition to the antibacterial agent of the present invention.

### <Resin>

The resin optionally contained in the antibacterial coating material of the present invention is not particularly limited and may be, for example, an acrylic resin, an acrylic-silicone resin, a silicone resin, an amino-alkyd resin, an epoxy resin, a phenolic resin, a urethane resin, an unsaturated polyester resin, or a fluororesin.

### <Solvent>

The solvent contained in the antibacterial coating material of the present invention is not particularly limited and may be selected from, for example, water, alcohols, ketones, aliphatic hydrocarbons, aromatic hydrocarbons, and esters.

### <Content of antibacterial agent>

The content of the antibacterial agent in the antibacterial coating material of the present invention as a ratio of the antibacterial agent to a total of the resin and the antibacterial agent in the coating material may be, for example, 1% by mass or greater, preferably 2% by mass or greater, more preferably 5% by mass or greater, even more preferably 10% by mass or greater, particularly preferably 20% by mass or greater, and especially preferably 30% by mass or greater from the viewpoint of exhibiting a high antibacterial performance, and may be, for example, 80% by mass or less, preferably 70% by mass or less, more preferably 60% by mass or less, even more preferably 50% by mass or less, particularly preferably 40% by mass or less, and especially preferably 30% by mass or less or 20% by mass or less from the viewpoint of obtaining satisfactory applicability.

### <Production method for antibacterial coating material>

The production method for the antibacterial coating material of the present invention is not particularly limited. For example, the antibacterial coating material may be prepared by mixing a commercially available synthetic resin coating material with the antibacterial agent of the present invention at a predetermined ratio.

### <Application>

The antibacterial coating material of the present invention can be used to form the antibacterial layer in the antibacterial product of the present invention. Further, the antibacterial coating material may be used as, for example, a joint material (a filler for gaps in tiles, concrete, and bricks), a sealing material, a caulking material, or an adhesive.

### EXAMPLES

### «Examples 1 to 3»

### <Synthesis of lanthanum ferrite>

0.4 molar parts of La₂O₃, 0.2 molar parts of FeOOH, and water were charged in a ball mill with 10 mm Φ alumina balls as the pulverizing media and pulverized and mixed for 5 h. The resulting pulverized material was dried at 300 °C for 15 h and then crushed with a rotary pulverizer. The resulting crushed material was fired at 1,000 °C for 15 h and then pulverized with a hammer mill, whereby lanthanum ferrite was obtained.

The La:Fe ratio of the obtained lanthanum ferrite in each Example was as follows.
Examples 1 and 2, La:Fe = 80:20 (molar ratio), formula: La_{1.6}Fe_{0.4}O₃
Example 3, La:Fe = 50:50 (molar ratio), formula: La_{1.0}Fe_{1.0}O₃

### <Evaluation>

### (Measurement of antibacterial activity value)

The obtained lanthanum ferrite was mixed with a two-liquid solvent-based acrylic urethane resin (main agent: ACRYDIC^{™} A-801-P, manufactured by DIC Corporation; curing agent: BURNOCK^{™} DN-980, manufactured by DIC Corporation) so that the concentration to the total solid content was as shown in Table 1 to prepare an evaluation coating material.

The prepared evaluation coating material was applied onto a PET film so as to have a thickness of about 70 µm and dried at room temperature for 1 day to prepare a coating film. The resulting coating film was measured for antibacterial activity against *Escherichia coli* and *Staphylococcus aureus* in accordance with JIS Z 2801.

### (Determination of antibacterial effect)

Based on the antibacterial value obtained above, the antibacterial effect was determined according to the following evaluation criteria. The determination results are shown in Table 1.
AA: Both of the antibacterial activity values for *Escherichia coli* and *Staphylococcus aureus* were 2.0 or greater.
A: Both of the antibacterial activity values for *Escherichia coli* and *Staphylococcus aureus* were 1.0 or greater and less than 2.0.
B: Either of the antibacterial activity values for *Escherichia coli* and *Staphylococcus aureus* was 1.0 or greater and less than 2.0.
C: Both of the antibacterial activity values for *Escherichia coli* and *Staphylococcus aureus* were less than 1.0.

### <<Comparative Example 1»

A coating film was formed in the same manner as in Example 1, using the two-liquid solvent-based acrylic urethane resin without mixing in lanthanum ferrite. An antibacterial activity value was measured and the antibacterial effect was determined in the same manner as in Example 1 for the resulting coating film. The measurement and determination results are shown in Table 1.

### «Example 4»

### (Measurement of antibacterial activity value)

Lanthanum ferrite obtained in the same manner as in Example 1 was mixed with a water-based acrylic urethane emulsion (VONCOAT^{™} HY-364, manufactured by DIC Corporation) so that the concentration to the total solid content was as shown in Table 1 to prepare an evaluation coating material.

The prepared evaluation coating material was applied onto a PET film so as to have a thickness of about 70 µm and dried at room temperature for 1 day to prepare a coating film. The resulting coating film was measured for antibacterial activity against *Escherichia coli, Staphylococcus aureus, Salmonella,* and *Legionella* in accordance with JIS Z 2801.

### (Determination of antibacterial effect)

Based on the antibacterial value obtained above, the antibacterial effect was determined according to the following evaluation criteria. The determination result is shown in Table 2.
AA: Antibacterial activity values for all bacterial strains were 2.0 or greater.
A: Antibacterial activity values for all bacterial strains were 1.0 or greater and less than 2.0.
B: Antibacterial activity values for all bacterial strains were 1.0 or greater and less than 2.0.
C: Antibacterial activity values for all bacterial strains were less than 1.0.

### «Example 5»

### (Measurement of antibacterial activity value)

Except that lanthanum ferrite obtained in the same manner as in Example 3 was used, the antibacterial effect was determined in the same manner as in Example 5. The determination result is shown in Table 2.

### <<Reference Example 1»

Viable cell count for each of *Escherichia coli* and *Staphylococcus aureus* on an unprocessed PET film without a coating film formed thereon was measured in accordance with JIS Z 2801. The measurement results are shown in the lower part of Table 1.

### [Table 1]

**Table 1**

| | La:Fe (molar ratio) | Firing temperature (°C) | Concentration (% by mass) | Resin type | Antibacterial activity value | | | | Determination |
|---|---|---|---|---|---|---|---|---|---|
| | | | | | *Escherichia coli* | *Staphylococcus aureus* | *Salmonella* | *Legionella* | |
| Example 1 | 80:20 | 1000 | 30 | A-801-P | 4.8 | 2.3 | - | - | AA |
| Example 2 | 80:20 | 1000 | 50 | A-801-P | 6.1 | 4.4 | - | - | AA |
| Example 3 | 50:50 | 1000 | 50 | A-801-P | 0.3 | 1.0 | - | - | B |
| Comparative Example 1 | - | - | 0 | A-801-P | 0.1 | 0.7 | - | - | C |
| Example 4 | 80:20 | 1000 | 50 | HY-364 | 5.9 | 4.2 | 5.2 | 2.1 | AA |
| Example 5 | 50:50 | 1000 | 50 | HY-364 | 5.9 | 4.2 | 5.2 | 2.1 | AA |
| | | | | | | | | | |

| | | | | | Viable cell count (bacteria/cm²) | | | | |
|---|---|---|---|---|---|---|---|---|---|
| | | | | | *Escherichia coli* | *Staphylococcus aureus* | | | |
| Reference Example 1 | Viable cell count on unprocessed film | | | | 7.3 × 10⁵ | 1.8 × 10⁴ | | | |

The abbreviations of the resin types in Table 1 have the following meanings.
A-801-P: two-liquid solvent-based acrylic urethane resin (main agent: ACRYDIC^{™} A-801-P, manufactured by DIC Corporation; curing agent: BURNOCK^{™} DN-980, manufactured by DIC Corporation)
HY-364: water-based acrylic urethane emulsion (VONCOAT^{™} HY364, manufactured by DIC Corporation)

### «Example 6»

### (Measurement of antibacterial activity value)

Lanthanum ferrite obtained in the same manner as in Example 1 was mixed with a water-based acrylic urethane emulsion (VONCOAT^{™} HY-364, manufactured by DIC Corporation) so that the concentration to the total solid content was as shown in Table 2 to prepare an evaluation coating material.

The prepared evaluation coating material was applied onto a PET film so as to have a thickness of about 70 µm and dried at room temperature for 1 day to prepare a coating film. The resulting coating film was measured for antibacterial activity against *Escherichia coli*, *Staphylococcus aureus,* 0-157, and MRSA (methicillin-resistant *Staphylococcus aureus)* in accordance with JIS Z 2801.

### (Determination of antibacterial effect)

Based on the antibacterial value obtained above, the antibacterial effect was determined according to the following evaluation criteria. The determination results are shown in Table 2.
AA: Antibacterial activity values for all bacterial strains were 2.0 or greater.
A: Antibacterial activity values for all bacterial strains were 1.0 or greater and less than 2.0.
B: Antibacterial activity values for all bacterial strains were 1.0 or greater and less than 2.0.
C: Antibacterial activity values for all bacterial strains were less than 1.0.

### <<Reference Example 2»

Viable cell count for each of *Escherichia coli, Staphylococcus aureus,* 0-157, and MRSA (methicillin-resistant *Staphylococcus aureus)* on an unprocessed PET film without a coating film formed thereon was measured in accordance with JIS Z 2801. The measurement results are shown in the lower part of Table 2.

### [Table 2]

**Table 2**

| | La:Fe (molar ratio) | Firing temperature (°C) | Concentration (% by mass) | Antibacterial activity value | | | | | | Determination |
|---|---|---|---|---|---|---|---|---|---|---|
| | | | | *Escherichia coli* | *Staphylococcus aureus* | *Salmonella enterica* | *Staphylococcus epidermidis* | O-157 | MRSA | |
| Example 6 | 80:20 | 1000 | 50 | 3.2 | 3.0 | 2.3 | 2.5 | 3.1 | 3.1 | AA |
| | | | | | | | | | | |

| | | | | Viable cell count (bacteria/25 cm²) | | | | | | |
|---|---|---|---|---|---|---|---|---|---|---|
| | | | | *Escherichia coli* | *Staphylococcus aureus* | *Salmonella enterica* | *Staphylococcus epidermidis* | O-157 | MRSA | |
| Reference Example 2 | Viable | cell count on unprocessed | film | 4.2 × 10¹⁴ | 5.2 × 10¹⁴ | 1.4 × 10¹⁴ | 1.0 × 10¹⁴ | 2.7 × 10¹⁴ 4.2 | × 10¹⁴ | |

The viable cell count of Reference Example 2 shown in the lower part of Table 2 was about 10⁹ (1 billion) to 10¹⁰ (10 billion) times higher than the viable cell count of Reference Example 1 shown in the lower part of Table 1. Therefore, the test of Example 6 was an extremely harsh test as compared to the tests of Examples 1 to 5 and Comparative Example 1.

## Claims

1. An antibacterial agent, represented by a formula (1) below:
Ln₂ₓFe₂(₁₋ₓ)O₃ (1)
where in the formula (1), Ln is a rare earth element selected from the group consisting of lanthanum, praseodymium, neodymium, and yttrium; and x is a number of 0.45 or greater and less than 1.00.

2. The antibacterial agent according to claim 1, where in the formula (1), x is a number of 0.65 or greater and 0.85 or less.

3. The antibacterial agent according to claim 1 or 2, where in the formula (1), Ln is lanthanum.

4. An antibacterial product, comprising a substrate and an antibacterial layer, wherein
the antibacterial layer is a layer comprising the antibacterial agent according to any one of claims 1 to 3.

5. The antibacterial product according to claim 4, wherein the antibacterial layer further comprises a resin.

6. The antibacterial product according to claim 4 or 5, which is selected from the group consisting of an interior wall, a building material, a joint material, a sealing material, furniture, an air filter, an insole, a garment, a hygienic product, a medical material or tool, a bath mat, a towel, and bedding.

7. An antibacterial coating material, comprising the antibacterial agent according to any one of claims 1 to 3.

8. The antibacterial coating material according to claim 7, further comprising a resin and a solvent.
